# EUROPÄISCHE PATENTSCHRIFT

(11) **EP 0 702 446 B1**
(45) Veröffentlichungstag und Bekanntmachung des Hinweises auf die Patenterteilung: **04.11.1998**
(21) Anmeldenummer: 95810543.9
(22) Anmeldetag: 01.09.1995
(51) Int. Cl.: H02J 3/40

(54) **Vorrichtung zum Synchronisieren einer Synchronmaschine**
Apparatus for synchronising a synchronous machine
Dispositif de synchronisation d'une machine synchrone

(30) Priorität: 19.09.1994 DE 4433283
(43) Veröffentlichungstag der Anmeldung: 20.03.1996
(73) Patentinhaber: ASEA BROWN BOVERI AG, 5400 Baden (CH)
(72) Erfinder: Blatter, Richard, CH-5400 Ennetbaden (CH)

(56) Entgegenhaltungen:
- DE-A- 1 465 306
- DE-A- 1 538 364
- DE-A- 3 410 878
- US-A- 1 873 985
- VDI ZEITSCHRIFT, Bd. 105, Nr. 32, 1963, Seiten 1524-1525, XP002011368 C.BREITENSTEIN: "SCHIFFSELEKTRONIK"

## Beschreibung

### TECHNISCHES GEBIET

Bei der Erfindung wird ausgegangen von einer Vorrichtung zum Synchronisieren einer Synchronmaschine nach dem Oberbegriff des Patentanspruchs.

### STAND DER TECHNIK

Mit dem Oberbegriff des Patentanspruchs nimmt die Erfindung auf einen Stand der Technik Bezug, wie er aus der DE-A-1538364 bekannt ist. Aus der DE 34 23 659 A1 ist ein weiterer Stand der Technik bekannt. Dort ist zur Verbesserung des Wirkungsgrades, zur Erzielung eines vom Netz unabhängigen Anlaufs eines als Wellengenerator betriebenen Synchrongenerators und von Notlauf eigenschaften eine direkt speisende Netzschiene als auftrennbare Überbrückungsleitung für einen Umrichter und eine ihm nachgeschaltete Netzdrossel ausgebildet, die bei einer Wellengeneratorfreqenz innerhalb eines Toleranzbereiches für Über- und Unterfrequenz des Netzes geschlossen und bei einer Frequenz außerhalb des Toleranzbereiches geöffnet ist.

Nachteilig dabei ist, daß die Netzdrossel mit dem vollen Netzstrom belastet wird.

Aus der DE-C2-3 410 878 sind ein Verfahren und eine Vorrichtung zum Anfahren eines Bahnumformers, der zum Energieaustausch zwischen einem Drehstromnetz und einem Einphasen-Bahnnetz dient, angegeben, bei denen zum Synchronisieren einer Synchronmaschine eine Asynchronmaschine verwendet und mittels eines Direktumrichters drehzahlgeregelt betrieben wird. Zum Hochlaufen der Asynchronmaschine wird eine Teilspannung eines Anlaßtransformators verwendet. Kurz vor Erreichen der Nenndrehzahl wird mit einem Schalter der Sternpunkt des Anlaßtransformators geöffnet, so daß der größere Teil seiner Wicklung als Drosselspule wirksam wird. Nach etwa 0,5 s wird diese Teilwicklung mittels eines weiteren Schalters kurzgeschlossen und damit die Ständerwicklung der Asynchronmaschine direkt ans Netz geschaltet.

Bei einer Fehlsynchronisation der Synchronnaschine durch eine fehlerhafte Synchronisationseinrichtung oder durch eine Fehlbedienung können Drehmomente auftreten, welche für einen Wellenstrang kritisch sind und zu einer plastischen Verformung des Wellenstranges führen können. Um das zu vermeiden, ist eine Überdimensionierung des Wellenstranges erforderlich. Bei Einwellenmaschinen werden Drehmomentwerte erreicht, deren Beherrschung kostspielige Maßnahmen im Wellenstrang erfordern.

Aus der EP-B1-0 152 002 ist ein Phasenschieber für ein vermaschtes, mehrphasiges Wechselstromnetz bekannt, bei dem induktive Widerstände, insbesondere Luftdrosseln, zur Phasenverschiebung verwendet werden, die durch Wechselstromschalter ein- und ausschaltbar sind. Anstelle von Luftdrosseln können Drosseln mit ferromagnetischem Kern oder die Impedanz eines Transformators verwendet werden, dessen Sekundärwicklung mittels eines Wechselstromschalters kurzgeschlossen werden kann.

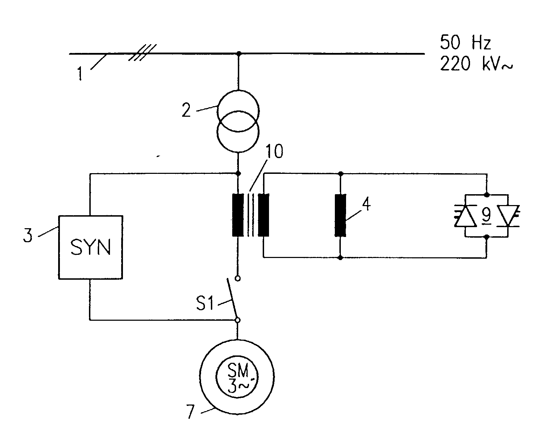

Die DE-A-1538364 offenbart eine Vorrichtung (Fig.1) zum Synchronisieren einer Synchronmaschine G, die statorseitig über mindestens einen Schalter 16 mit einem Wechselspannungsnetz Un in elektrischer Verbindung steht. Zwischen der Synchronmaschine und dem Wechselspannungsnetz ist ein in seiner Induktivität reduzierbarer induktiver Widerstand vorgesehen. Beim Zuschaltern der Synchronmaschine G wird der aus den Transformatoren 1 bis 3 bestehende induktive Widerstand durch den Schützkontakt 16 überbrückt, was einer Reduktion seiner Induktivität gleichkommt.

### DARSTELLUNG DER ERFINDUNG

Die Erfindung, wie sie in dem Patentanspruch definiert ist, löst die Aufgabe, eine Vorrichtung zum Synchronisieren einer Synchronmaschine der eingangs genannten Art derart weiterzuentwickeln, daß bei einer Fehlsynchronisation der Synchronmaschine eine mechanische Überbeanspruchung des Wellenstranges auf einfachere Weise vermieden wird.

Ein Vorteil der Erfindung besteht darin, daß die Strombegrenzungsdrossel mit einem reduzierten Strom belastet wird und somit kleiner ausgelegt werden kann. Ein Schalter in einem Parallelzweig zu einer Primärwicklung des Stromwandlers entfällt. Der zusätzlich benötigte Wechselstromschalter im Stromkreis einer Sekundärwicklung des Stromwandlers kann auf einen niedrigen Strom und eine relativ kleine Spannung ausgelegt sein.

### KURZE BESCHREIBUNG DER ZEICHNUNG

Die Erfindung wird nachstehend anhand eines Ausführungsbeispiels erläutert. Die einzige Figur zeigt ein Schaltbild einer Synchronmaschine, die statorseitig über einen Stromwandler an ein Wechselspannungsnetz anschließbar ist.

### WEGE ZUR AUSFÜHRUNG DER ERFINDUNG

Die einzige Figur zeigt eine 3phasige Turbogruppe bzw. eine als Generator betriebene Synchronmaschine (7), die rotorseitig über einen Wellenstrang bzw. eine Welle mit einer nicht dargestellten Gasturbine antriebsmäßig verbunden ist. Statorseitig ist die Synchronmaschine (7) elektrisch über einen 1. Schalter bzw. Generatorschalter (S1), einen dazu in Reihe geschalteten Stromwandler (10) und einen Transformator bzw. Maschinentransformator (2) an ein 3phasiges Drehstromnetz bzw. Wechselspannungsnetz (1) mit,einer Frequenz von 50 Hz und einer Wechselspannung von 220 kV anschließbar. Über den Schalter (S1) und den Stromwandler (10) ist eine Synchronisiereinrichtung (3) zum Synchronisieren der Synchronmaschine (7) angeschlossen.

Parallel zu einer Sekundärwicklung des Stromwandlers (10) sind eine Luftdrossel (4) und ein Wechselstromschalter (9) geschaltet. Bei kurzgeschlossener Sekundärwicklung des Stromwandlers (10) wirkt dieser im netzseitigen Anschluß der Synchronmaschine (7) nur als vernachlässigbare Streuinduktivität. Es versteht sich, daß anstelle eines elektronischen Wechselstromschalters (9) auch ein mechanischer einsetzbar ist.

Das Drehmoment beim Synchronisieren der Synchronmaschine (7), die z. B. für eine elektrische Leistung im Bereich von 160 MW - 220 MW ausgelegt ist, wird durch die Impedanzen der Synchronmaschine (7), des Maschinentransformators (2) und des Wechselspannungsnetzes (1) bestimmt. Von diesen 3 Impedanzen läßt sich allenfalls die Größe der Impedanz des Maschinentransformators (2) in einem gewissen Rahmen beeinflussen.

Normalerweise treten am Maschinentransformator (2) Kurzschlußspannungen im Bereich von 12 % - 15 % von dessen Nennkurzschlußspannung auf. Bei Kurzschlußspannungen bis zu 22 % der Nennkurzschlußspannung bleiben die mechanischen Beanspruchungen der Welle innerhalb vertretbarer Grenzen. Um zu gewährleisten, daß auch im Falle eines Synchronisierfehlers auftretende Kurzschlußspannungen 22 % der Nennkurzschlußspannung des Maschinentransformators (2) nicht überschreiten, wird nach Erreichen der Synchrondrehzahl der Synchronmaschine (7) und vor deren Anschluß an das Wechselspannungsnetz (1) der Wechselstromschalter (9) im Stromkreis der Sekundärwicklung des Stromwandlers (10) gesperrt, so daß zwischen den Statorwicklungen der Synchronmaschine (7) und dem Maschinentransformator (2) eine relativ große Impedanz wirkt. Diese Impedanz begrenzt einen etwaigen fehlerbedingten Überstrom und damit das in der Synchronmaschine (7) wirksam werdende Drehmoment auf ein vertretbares Maß, bei dem keine plastische Verformung der Welle auftreten kann. Nach erreichter Synchronisierung mit dem Wechselspannungsnetz (1) wird diese Impedanz durch Schließen des Wechselstromschalters (9) reduziert.

Nach Erreichen der Synchrondrehzahl der Synchronmaschine (7) wird von der Synchronisiereinrichtung (3) der für hohe Leistung ausgelegte und als Ausschaltschutz dienende Generatorschalter (S1) geschlossen. Der Generatorschalter (S1) synchronisiert dabei auf eine Impedanz von 22 % der wirksamen Gesamtimpedanz von Synchronmaschine (7), Stromwandler (10), Maschinentransformator (2) und Wechselspannungsnetz (1), indem der Stromwandler (10) auf eine große impedanz geschaltet wird.

Es versteht sich, daß die Schaltung für andere als die angegebenen Leistungen, Frequenzen und Spannungen ausgelegt sein kann. Dabei kann der Maschinentransformator (2) ggf. entfallen. Die Synchronmaschine (7) kann z. B. mit einem Antrieb verbunden sein, wobei sie als Antriebsmotor wirkt.

Der Wechselstromschalter (9) im Sekundärkreis des Stromwandlers (10) bietet den Vorteil, daß er nur für die heruntertransformierte, wesentlich geringere Sekundärspannung des Stromwandlers (10) ausgelegt sein muß.

Wichtig ist, daß beim Synchronisieren ein induktiver Widerstand (10) zwischen der Synchronmaschine (7) und dem Wechselspannungsnetz (1) wirksam und danach praktisch unwirksam ist.

### BEZEICHNUNGSLISTE

- 1: Wechselspannungsnetz, Drehstromnetz
- 2: Transformator, Maschinentransformator
- 3: Synchronisiereinrichtung
- 4: Luftdrossel, Drosselspule, induktiver Widerstand
- 7: Synchronmaschine, Generator
- 9: Wechselstromschalter
- 10: Stromwandler
- S1: 1. Schalter, Generatorschalter

## Patentansprüche

1. Vorrichtung zum Synchronisieren einer Synchronmaschine (7),
a) die statorseitig über mindestens einen 1. Schalter (S1) mit einem Wechselspannungsnetz (1) in elektrischer Verbindung steht, wobei
b) zwischen der Synchronmaschine (7) und dem Wechselspannungsnetz (1) mindestens ein in seiner Induktivität reduzierbarer induktiver Widerstand (10) vorgesehen ist,
dadurch gekennzeichnet,
c) daß der 1. Schalter (S1) über eine 1. Wicklung eines Stromwandlers (10) mit dem Wechselspannungsnetz (1) in elektrischer Verbindung steht und
d) daß eine 2. Wicklung des Stromwandlers (10) parallel zu einer Luftdrossel (4) und
e) parallel zu einem Wechselstromschalter (9) geschaltet ist.

## Claims

1. Device for synchronizing a synchronous machine (7),
a) which is electrically connected on its stator side to an AC voltage network (1), via at least one first switch (S1), it being the case that
b) at least one inductive impedance (10) with a reducible inductance is provided between the synchronous machine (7) and the AC network (1),
characterized
c) in that the first switch (S1) is electrically connected to the AC network (1) via a first winding of a current transformer (10), and in that
d) a second winding of the current transformer (10) is connected in parallel with an air-core inductor (4), and
e) is connected in parallel with an AC circuit-breaker (9).

## Revendications

1. Dispositif de synchronisation d'une machine synchrone (7),
a) qui, du côté stator, se trouve en liaison électrique à travers au moins un premier commutateur (S1) avec un réseau de tension alternative (1),
b) au moins une résistance inductive (10), dont l'inductance peut être réduite, étant prévue entre la machine synchrone (7) et le réseau de tension alternative (1),
caractérisé
c) en ce que le premier commutateur (S1) se trouve en liaison électrique avec le réseau de tension alternative (1) à travers un premier enroulement d'un convertisseur électrique (10),
d) en ce qu'un second enroulement du convertisseur électrique (10) est branché en parallèle avec une réactance à air (4), et
e) en parallèle avec un commutateur de courant alternatif (9).
